# EUROPÄISCHE PATENTSCHRIFT

(11) **EP 3 713 755 B1**
(45) Veröffentlichungstag und Bekanntmachung des Hinweises auf die Patenterteilung: **04.05.2022**
(21) Anmeldenummer: 18796006.7
(22) Anmeldetag: 30.10.2018
(51) Int. Cl.: B30B 9/24, A22C 17/04

(54) **WEICHSEPARATOR MIT FÜLLZUSTANDSABHÄNGIGER ANPASSUNG DER GESCHWINDIGKEIT UND VERFAHREN ZUM BETREIBEN EINES SOLCHEN WEICHSEPARATORS**
SOFT MATERIAL SEPARATOR WITH FILL-LEVEL-DEPENDENT ADJUSTMENT OF SPEED, AND METHOD FOR OPERATING SUCH A SOFT MATERIAL SEPARATOR
SÉPARATEUR DE SUBSTANCES MOLLES AYANT UNE ADAPTATION DE LA VITESSE DÉPENDANTE DU NIVEAU DE REMPLISSAGE ET PROCÉDÉ POUR FAIRE FONCTIONNER UN TEL SÉPARATEUR DE SUBSTANCES MOLLES

(30) Priorität: 30.01.2018 DE 102018101985
(43) Veröffentlichungstag der Anmeldung: 30.09.2020
(73) Patentinhaber: Modernpack Hoppe Gmbh, 51491 Overath (DE)
(72) Erfinder: GÜNTHER, Hoppe, 51491 Overath (DE)
(74) Vertreter: Müller, Eckhard
(86) Internationale Anmeldenummer: PCT/EP2018/079679
(87) Internationale Veröffentlichungsnummer: WO 2019/149397

(56) Entgegenhaltungen:
- EP-B1- 0 375 876
- DE-B1- 2 548 980

## Beschreibung

Die Erfindung betrifft einen Weichseparator nach dem Oberbegriff des Anspruchs 1 sowie ein Verfahren zum Betreiben eines solchen Weichseparators.

Ein Weichseparator ist eine Vorrichtung zum Trennen und Separieren eines aus Stoffanteilen unterschiedlicher Konsistenz bestehenden Stoffgemenges. Weichseparatoren werden beispielsweise zum Bearbeiten unterschiedlich fester, unterschiedlich fließfähiger oder unterschiedlich weicher Produkte verwendet, insbesondere bei der Bearbeitung von Lebensmittelprodukten, wie beispielsweise Fleischprodukte. So können mit Weichseparatoren verschiedene Fleischarten zur Herstellung von sogenanntem Separatorenfleisch passiert und entsehnt werden. Weichseparatoren eignen sich auch zur Herstellung von haut- und grätenfreier Fischfarce, zur Herstellung von Obst- und Gemüsesäften oder -musen und sind auch zur Herstellung von Püree aus Knollengemüse, wie beispielsweise aus Kartoffeln, geeignet. Die Anwendungsgebiete von Weichseparatoren erstrecken sich zum Teil sogar in die Recyclingindustrie, beispielsweise zur Extraktion von Inhaltsstoffen aus Altverpackungen.

Ein Weichseparator weist typischerweise eine im Wesentlichen rotationssymmetrisch ausgebildete und umfangsseitig perforierte Lochtrommel auf, welche um ihre Rotationsachse betreibbar ausgebildet ist. An einem tangential zur Umfangswand der Lochtrommel verlaufenden Abschnitt ist ein endloses Quetschband positioniert. Die Lochtrommel und das Quetschband sind mittels eines Antriebs betreibbar. Die Bewegungen der Lochtrommel und des Quetschbandes sind gewöhnlich so aufeinander abgestimmt, dass es in dem Bereich ihrer tangentialen Überdeckung zu einer gleichsinnigen, vorzugsweise synchronen Umfangsbewegung kommt.

In einer der Überdeckung vorgelagerten und seitlich begrenzten Einzugszone laufen Lochtrommel und Quetschband in Einzugsrichtung aufeinander zu, so dass ein dort eingebrachtes Stoffgemenge bei laufendem Quetschband und laufender Lochtrommel zwischen die Lochtrommel und das Quetschband eingezogen und gegen die perforierte Umfangswand der Lochtrommel gedrückt wird. Dabei tritt wenigstens einer der Stoffanteile durch die Perforation der Umfangswand in das Innere der Lochtrommel ein und wird so von den anderen Stoffanteilen separiert. Die Perforation der Lochtrommel ist anwendungsabhängig so ausgebildet, dass die Umfangswand der Lochtrommel für wenigstens einen Stoffanteil einer bestimmten Konsistenz unter dem durch das Quetschband ausgeübten Druck durchlässig ist. Die Lochtrommel wird oftmals auch als Hohltrommel, das Quetschband als Pressband und der Weichseparator daher als "Separator des Hohltrommel-Pressband-Typs" oder auch als "Pressband-Separiereinrichtung" bezeichnet.

Gewöhnlich liegt das Quetschband unter einem vorgegebenen Druck, also unter einer Vorspannung, unmittelbar an der Umfangswand der Lochtrommel an, um bei Hindurchführen des Stoffgemenges zwischen Umfangswand und Quetschband eine ausreichend große Presskraft zu gewährleisten. Der Anpressdruck wird mittels einer gegen die Lochtrommel vorgespannten Andrückwalze auf das Quetschband übertragen. Bei bestimmten Anwendungsfällen, beispielsweise bei der Herstellung von Kartoffelpüree, kann die Positionierung des Quetschbandes gegenüber der Lochtrommel auch in der Weise erfolgen, dass zwischen der Umfangswand der Lochtrommel und dem Quetschband ein Minimalspalt verbleibt, so dass das Quetschband mittelbar erst dann einen gegen die Lochtrommel gerichteten Druck ausübt, wenn der Spalt durch das hindurchgeführte Stoffgemenge zumindest teilweise ausgefüllt ist.

Die Quetschbänder selbst bestehen zumindest zum Teil aus oder sind auf der der Lochtrommel zugewandten Seite mit einem nachgiebigen Material beschichtet. Dies dient dazu, dass die nicht in die Lochtrommel hineintretenden Stoffanteile temporär in das im Verhältnis zur Lochtrommel weichere, elastische Quetschband einsinken. Bspw. werden bei der Erzeugung von Separatorenfleisch Knochen, also in ihrer Konsistenz weniger weiche Anteile, in das elastische Quetschband hineingedrückt, sodass eine zu starke Zerkleinerung von Knochenteilen durch übermäßige Druckbelastung, insbesondere Knochen- und Knorpelsplittern im Fleisch, vermieden wird.

Die Verarbeitung bzw. Trennung der weicheren und/oder fließfähigeren und/oder weniger festen Stoffe von den anderen Stoffanteilen erfolgt in der durch die Überdeckung von Lochtrommel und Quetschband gebildeten Verarbeitungszone des Weichseparators. Die außen an der Umfangswand der Lochtrommel verbleibenden Stoffanteile werden mittels einer Abstreifvorrichtung in einer Abgabezone von der Lochtrommel bzw. dem Quetschband entfernt.

Der mechanische Aufbau von bekannten Weichseparatoren weist bereits gute Verschleiß- und Effizienzeigenschaften im Dauerbetrieb und unter hoher Last auf. Zu vermeiden ist in jedem Fall aber ein Trockenlauf, d.h. ein Betrieb ohne Stoffgemenge, da hierdurch ein besonders hoher Verschleiß insbesondere am Quetschband aber auch an anderen Komponenten hervorgerufen wird. Auch unnötig hohe Quetschbandgeschwindigkeiten wirken sich negativ auf die Standzeit der Maschine auf Grund eines erhöhten Bauteilverschleißes aus. Hierbei kommt es zum Teil zu hohen Temperaturentwicklungen aufgrund der zwischen Lochtrommel und Quetschband auftretenden Beanspruchungen. Unter Umständen ist es erforderlich, die Andrückwalze zu kühlen oder das Stoffgemenge vor dem Durchlauf durch den Weichseparator so stark abzukühlen, dass das Stoffgemenge Wärme aus dem Weichseparator austrägt und trotzdem unterhalb ggf. vorgeschriebener Temperaturgrenzen bleibt.

Aus dem Stand der Technik sind daher Maßnahmen bekannt, um einen Trockenlauf des Weichseparators zu verhindern und die Verarbeitungsgeschwindigkeit an die Produktzufuhr bzw. die Produktzufuhr an die Verarbeitungsgeschwindigkeit anzupassen.

Die DE 196 37 640 A1 beschreibt ein Überwachungssystem, welches mittels eines Temperatursensors überwacht, ob ein zu verarbeitendes Produkt in die Einzugszone eingegeben wird. Der Temperatursensor nimmt die Wärmestrahlung des Quetschbandes in der Einzugszone auf und ist zur Detektion einer Unterbrechung der Wärmestrahlung entlang einer Sichtlinie ausgebildet. Eine Unterbrechung der Wärmestrahlung in der Sichtlinie des Sensors erfolgt immer dann, wenn ein in die Einzugszone hineinfallendes Stück des zu verarbeitenden Produktes die Sichtlinie des Temperatursensors kreuzt. Auf diese Weise soll überwacht werden, ob aktuell eine Produktzufuhr in die Einzugszone erfolgt. Wird die Wärmestrahlung entlang der Sichtlinie des Temperatursensors dauerhaft unterbrochen, geht das System davon aus, dass sich das zu verarbeitende Produkt in der Einzugszone aufstaut und daher angehäuft hat. Um eine Überfüllung der Einzugszone zu verhindern, wird der Antrieb einer der Einzugszone vorgelagerten Beschickungseinrichtung automatisch angehalten. Steht wiederum dauerhaft ein Temperatursignal des Quetschbandes an, geht das System davon aus, dass aktuell keine Produktzufuhr erfolgt. Der Antrieb des Quetschbandes und der Lochtrommel wird dann automatisch abgeschaltet, um einen Trockenlauf zu verhindern.

Einen ähnlichen Ansatz lehrt die EP 0 375 876 B1, bei welcher ein optischer bzw. akustischer Tastsensor ein eine Sensorsichtlinie kreuzendes oder blockierendes Produkt detektieren soll, um das Quetschband und die Lochtrommel bzw. eine Zuführungseinrichtung bedarfsweise stillzusetzen oder zu aktivieren. Die EP 0 375 876 B1 lehrt ferner, die Verarbeitungsgeschwindigkeit selbsttätig an die Produktzufuhr bzw. die Produktzufuhr an die Verarbeitungsgeschwindigkeit anzupassen. Dieser Ansatz zur Optimierung der Auslastung hat sich jedoch als unzuverlässig und nicht zielführend herausgestellt. Er wurde deshalb bereits vor Jahrzenten verworfen und nicht wieder aufgegriffen. Die Verarbeitungsgeschwindigkeit der heutzutage eingesetzten Weichseparatoren muss daher von einem entsprechend geschulten und erfahrenen Maschinenoperator manuell eingestellt und im Bedarfsfall angepasst werden. In der Praxis werden Weichseparatoren in der Regel mit der maximalen Verarbeitungsgeschwindigkeit betrieben. Die Anpassungen an eine schwankende Materialzufuhr erfolgen allenfalls durch das selbsttätige Abschalten der Produktzufuhr bzw. des Weichseparators. Weichseparatoren, die sich zum Schutz vor Trockenlauf oder Überfüllung selbsttätig aus- oder einschalten können, haben jedoch den Nachteil, dass die häufigen Schaltvorgänge sehr verschleißfördernd, energieintensiv, verfahrenstechnisch nicht umsetzbar und daher möglichst zu vermeiden sind. Weichseparatoren werden in der Regel auf die maximal zu erwartende Produktmenge pro Zeiteinheit, also auf eine hohe Verarbeitungsgeschwindigkeit ausgelegt und manuell darauf eingestellt, was zu relativ häufigem Ansprechen der automatischen Abschalteinrichtung zum Schutz vor Trockenlauf und damit der verschleißgefährdeten Komponenten führt. Jeder Abschalt- und Anfahrvorgang unterliegt einem gegenüber dem Dauerlauf erhöhten Verschleiß, erhöhtem Energieverbrauch und somit auch einem erhöhten Wärmeeintrag in die energieaufwändig gekühlte Umgebung der Lebensmittelverarbeitung.

Die DE 25 48 980 B1 offenbart eine Passiermaschine, welche eine Passiertrommel, ein endloses, diese auf einem Teil ihres Umfanges umschlingendes Pressband und einen über der Einzugsstelle des Pressbandes mit der Passiertrommel angeordneten Beschicktrichter 21 aufweist.

Ausgehend von den zuvor beschriebenen Nachteilen liegt der Erfindung die Aufgabe zugrunde, einen verbesserten Weichseparator vorzuschlagen, der hinsichtlich seines Verschleißes und des Energieverbrauches keine oder keine nennenswerten Einbußen in der Verarbeitungsausbeute aufweist.

Diese Aufgabe wird gelöst mit einem Weichseparator nach Anspruch 1 sowie einem Verfahren nach Anspruch 15.

Erfindungsgemäß ist ein Weichseparator mit einer umfangsseitig perforierten Lochtrommel sowie mit einem entlang eines Umfangsabschnittes der Lochtrommel geführten Quetschband vorgesehen. Das Quetschband ist zusammen mit der Lochtrommel betreibbar. Der Weichseparator weist eine Einzugszone auf, aus der ein aus Stoffanteilen unterschiedlicher Konsistenz bestehendes Stoffgemenge zum Trennen und Separieren der darin enthaltenen Stoffanteile zwischen die Lochtrommel und das Quetschband eingezogen wird. Die Erfindung zeichnet sich aus durch ein Erkennungssystem zur quantitativen Bestimmung des Füllzustandes der Einzugszone und eine mit dem Erkennungssystem verbundene Steuereinrichtung zur füllzustandsabhängigen Anpassung der Geschwindigkeit von Lochtrommel und Quetschband.

Unter quantitativer Bestimmung des Füllzustandes ist die Ermittlung einer Messgröße zu verstehen, die davon abhängt, wieviel Stoffgemenge sich in der Einzugszone befindet. Abhängig von dieser Messgröße stellt die Steuereinrichtung die Geschwindigkeit von Lochtrommel und Quetschband durch Ansteuerung ihres Antriebes ein. Durch die selbsttätige Anpassung der Verarbeitungsgeschwindigkeit des Weichseparators an die in die Einzugszone eingegebene Menge des Stoffgemenges können Lochtrommel und Quetschband stets mit der kleinstmöglichen Geschwindigkeit bei im Wesentlichen gleichbleibendem Produktdurchsatz betrieben werden. Die Standzeit der besonders verschleißbehafteten Komponenten, wie Lochtrommel und Quetschband, kann auf diese Weise spürbar erhöht werden, da die Anzahl der Stillsetz- und Wiedereinschaltvorgänge abnimmt. Hierdurch kann sich auch eine Senkung des Verbrauches an Antriebsenergie ergeben. Die Erfindung kann es sogar möglich machen, auf eine eigene, an dem Weichseparator vorgesehene, das Stoffgemenge puffernde Zuführungseinrichtung zu verzichten, wodurch sich der Aufbau des Weichseparators vereinfacht. Es wird sogar möglich, den bisher frei stehenden Weichseparator als integrales Glied in einer Verarbeitungslinie vorzusehen, da sich die bisher stets fest auf die maximal zu erwartende Materialmenge eingestellte Verarbeitungsgeschwindigkeit des Weichseparators nun selbsttätig auf die Geschwindigkeit der Zuführung des Stoffgemenges einstellen kann.

In bevorzugter Weise erfolgt die Bestimmung des Füllzustandes berührungslos. Diese Ausgestaltung hat den Vorteil, dass keine beweglichen Teile zur Ermittlung des Füllzustandes erforderlich sind. Auf diese Weise vereinfacht sich die hygienische Reinigung des Weichseparators und verhindert mechanische Störungen des Erkennungssystems. Vorzugsweise kann die Bestimmung optisch oder akustisch erfolgen, was sich gerade im Bereich der Lebensmittelverarbeitung als zuverlässig erwiesen hat. Die Bestimmung kann insbesondere optisch mittels Laserabtastung oder Kameraerfassung oder akustisch mittels Ultraschallmessung erfolgen.

In Weiterbildung dieser Ausgestaltung kann es vorgesehen sein, dass das Erkennungssystem wenigstens einen Sensor, vorzugsweise einen optischen, akustischen und/oder bildgebenden Sensor aufweist, dessen Erkennungsbereich sich in wenigstens zwei, vorzugsweise in drei Richtungen im Raum erstreckt und wenigstens bereichsweise auf die Einzugszone ausgerichtet ist.

Der besondere Vorteil eines solchen Sensors liegt darin, dass die durch das Zulaufen von Lochtrommel und Quetschband komplex geformte Einzugszone zumindest zu einem gewissen Grad "überblickt werden kann". Denn das in die Einzugszone eingebrachte Stoffgemenge besteht oftmals aus unregelmäßig geformten einzelnen Stücken, die sich nicht selbstständig und gleichmäßig in der Einzugszone verteilen. Das Stoffgemenge verhält sich zum Teil wie Schüttgut oder Stückgut und kann aufgrund der unterschiedlichen Konsistenzen der einzelnen Stoffanteile zum Agglomerieren oder Aneinanderhaften neigen. Dies kann zu einer ungleichmäßigen Verteilung innerhalb der Einzugszone führen, die mittels eindimensional arbeitender Sensoren nicht oder kaum erfassbar ist. Ein zwei- oder dreidimensional erfassender Sensor kann beispielsweise mit seinem Erfassungsbereich auf die gesamte Quetschbandbreite ausgerichtet sein und so die Ausnutzung der Quetschbandbreite überwachen. Die Geschwindigkeit von Lochtrommel und Quetschband kann dann bevorzugt auch oder allein davon abhängig gemacht werden, ob die Quetschbandbreite mit Stoffgemenge bedeckt ist oder nicht.

Die Erfindung kann auch in der Weise weitergebildet werden, dass das Erkennungssystem den Füllzustand mittels wenigstens einer Abstandsmessung ermittelt, bei der der Abstand zwischen wenigstens einem Sensor des Erkennungssystems und dem in einem Erkennungsbereich des Erkennungssystems befindlichen Stoffgemenge bestimmt wird. Diese Art der quantitativen Bestimmung des Füllzustandes hat sich als besonders geeignet erwiesen. Die Abstandsmessung kann beispielsweise mittels eines oder mehrerer Ultraschallsensoren erfolgen.

Gemäß einer weiteren Variante der Erfindung kann das Erkennungssystem zur Erzeugung eines vom Füllzustand abhängigen Messsignals und zur Berechnung eines von dem Messsignal abgeleiteten Füllzustandssignals ausgebildet sein. Dabei entspricht das Füllzustandssignal im Wesentlichen einem Füllstand, Füllgrad oder einer Füllmenge. Die Steuereinrichtung ist in diesem Fall zur füllzustandsabhängigen Anpassung der Geschwindigkeit von Lochtrommel und Quetschband anhand des Füllzustandssignals ausgebildet.

Hierdurch kann die Anpassung der Arbeitsgeschwindigkeit von Lochtrommel und Quetschband von unterschiedlichen, aus dem Sensorsignal abgeleiteten Sekundärwerten abhängig gemacht werden. Der Füllstand ist die Füllhöhe des Stoffgemenges, gemessen von einem Referenzpunkt am Grund der Einzugszone, bspw. von einem Referenzpunkt auf dem Quetschband. Der Füllgrad ist die prozentuale Größe, die angibt, zu welchem Grad die Einzugszone, bezogen auf ein Gesamtvolumen der Einzugszone, mit Stoffgemenge gefüllt ist. Diese abgeleitete Messgröße kann insbesondere dann von Vorteil sein, wenn die Einzugszone als nach oben geöffneter Einfülltrichter ausgebildet ist, bei welchem die Füllhöhe nicht linear bzw. proportional mit dem Füllgrad zusammenhängt.

Für eine Optimierung des Betriebs des Weichseparators kann es auch vorteilhaft sein, die füllzustandsabhängige Anpassung gegenüber der tatsächlich in der Einzugszone befindlichen Menge des Stoffgemenges vorzunehmen. Durch die Messung und Regelung bspw. der Füllhöhe des Stoffgemenges auf dem Quetschband kann auch die Ausnutzung der Quetschbandbreite optimiert werden. Das sich als Stück- bzw. Schüttgut auf dem Quetschband bzw. in der Einzugszone anhäufende Stoffgemenge verteilt sich unter Ausbildung eines natürlichen Schüttwinkels in der Einzugszone. Bei Einstellung eines von den Eigenschaften des Stoffgemenges abhängigen, natürlichen Schüttwinkels kann die Ausnutzung der vollen Quetschbandbreite und damit die gleichmäßige Verarbeitungsausbeute des Weichseparators verbessert werden.

Gemäß einer vorteilhaften Ausgestaltung können in der Steuereinrichtung feste, bestimmten Füllzuständen zugeordnete Geschwindigkeitswerte hinterlegt sein. Die in diesem Fall einfach aufgebaute Steuereinrichtung kann dann den Antrieb von Lochtrommel und Quetschband entsprechend einem ermittelten Füllzustand mit der dafür vorgegebenen Geschwindigkeit ansteuern. Ein solcher Aufbau des Regelkreises gestattet die Verwendung einfacher Antriebstechnik und verwirklicht dennoch eine quasi-proportionale Regelung.

Bevorzugt weist die Steuereinrichtung ein stetiges Regelglied auf, welches die Geschwindigkeit in Abhängigkeit des Füllzustandes, bspw. proportional zum Füllzustand, der Einzugszone regelt. Dies bringt den Vorteil mit sich, dass eine kontinuierliche Regelung ein gleichmäßiges Ansteigen und Abfallen der Geschwindigkeit ermöglicht, so dass die Änderung der Geschwindigkeit besonders materialschonend erfolgen kann.

In Weiterbildung dieses Gedankens kann die Steuereinrichtung zusätzlich mit wenigstens einem integrierenden und/oder differenzierenden Regelglied ausgebildet sein. Dies verbessert zum einen das Ansprechverhalten bei Verwendung eines differenzierenden Regelgliedes. Der Weichseparator kann so schneller auf eine sich ändernde Stoffgemengezufuhr reagieren. Durch Verwendung eines integrierenden Regelgliedes, welches eine von der Regeldifferenz abhängige Zeitrampe des Stellsignals erzeugen kann, kann die Genauigkeit der Regelung des Füllzustandes und das materialschonende Ansprechverhalten des Antriebes verbessert werden.

Gemäß einer vorteilhaften Ausgestaltung können die Lochtrommel und das Quetschband mittels eines Antriebes betreibbar und die Steuereinrichtung in den Antrieb integriert sein. Dies hat den Vorteil, dass das Erkennungssystem direkt mit dem Antrieb verbunden werden kann, wodurch sich der Aufbau des Weichseparators vereinfacht. Dabei kann die Steuereinrichtung beispielsweise in einen Frequenzumrichter des Antriebs integriert sein, wobei der Frequenzumrichter selbst Teil eines Elektromotors sein kann oder als eine mit dem Elektromotor des Antriebs verbundene Komponente ausgebildet ist.

In bevorzugter Weise kann die Steuereinrichtung zur Anpassung der Geschwindigkeit von Lochtrommel und Quetschband unterhalb eines Maximal- und/oder oberhalb eines Minimalwertes ausgebildet sein. Die Festlegung eines Maximalwertes kann sinnvoll sein, um eine Anpassung an die Geschwindigkeit von dem Weichseparator nachgelagerten Prozessen zu ermöglichen. Die Festlegung einer Mindestgeschwindigkeit kann zur Optimierung des Einzugsverhaltens des Stoffgemenges in der Einzugszone dienen, da zum Erreichen eines zuverlässigen Stoffeinzugs in die Verarbeitungszone bei Stoffgemengen bestimmter Zusammensetzungen eine minimale Einzugsgeschwindigkeit nicht unterschritten werden sollte.

Dabei können bevorzugt Eingabemittel zur Verstellung des Maximal- und/oder Minimalwertes der Geschwindigkeit von Lochtrommel und Quetschband an dem Weichseparator vorgesehen sein, die eine Verstellung der Geschwindigkeit während des Betriebs durch den Benutzer erlauben.

Zusätzlich zur Anpassung der Geschwindigkeit von Lochtrommel und Quetschband an den Füllzustand der Einzugszone kann die Steuereinrichtung zum vollständigen Stillsetzen von Lochtrommel und Quetschband bei Unterschreiten eines vorgegebenen Mindestfüllzustandes ausgebildet sein. Durch diese zusätzliche Sicherheitsmaßnahme kann ein Trockenlauf sicher vermieden werden, wenn es zu einer dauerhaften Unterbrechung der Zuführung von Stoffgemenge kommt oder die quantitative Bestimmung des Füllzustandes fehlerhaft ist.

In Weiterbildung dieser Variante kann das Erkennungssystem wenigstens einen Sensor zur quantitativen Bestimmung des Füllzustandes der Einzugszone und wenigstens einen Sensor zur Erkennung der Unterschreitung des Mindestfüllzustandes und/oder der Überschreitung eines Höchstfüllzustandes aufweisen. Diese zusätzliche Sicherheitsmaßnahme kann einen Trockenlauf verhindern, wenn bspw. die quantitative Bestimmung des Füllzustandes fehlerhaft sein sollte. Sie kann auch eine Überfüllung der Einzugszone und damit ein Blockieren des Weichseparators verhindern, wenn ein Höchstfüllzustand überschritten wird. Zur Verhinderung eines Trockenlaufes werden Lochtrommel und Quetschband aufgrund des Sensorsignals angehalten. Zur Verhinderung einer Überfüllung kann eine Zuführungseinrichtung aufgrund des Sensorsignals angehalten werden.

Alternativ oder zusätzlich kann die Erfindung dadurch ergänzt werden, dass die Steuereinrichtung zum Ausgeben eines Steuersignals bei Erkennung einer Überfüllung der Einzugszone ausgebildet ist, um eine dem Weichseparator vorgelagerte Zuführungseinrichtung zu verlangsamen oder stillzusetzen. Mittels einer solchen Sicherheitsmaßnahme kann eine Überfüllung und somit ein störungsbedingter, längerfristiger Ausfall des Weichseparators wirksam vermieden oder zumindest unwahrscheinlicher gemacht werden.

Das erfindungsgemäße Verfahren zum Betreiben eines Weichseparators ist dadurch gekennzeichnet, dass die Geschwindigkeit von Lochtrommel und Quetschband an den Füllzustand der Einzugszone angepasst, insbesondere in Abhängigkeit von dem Füllzustand der Einzugszone geregelt wird. Auf diese Weise wird der Weichseparator stets mit einer optimalen Geschwindigkeit, also in einem optimalen Arbeitspunkt betrieben.

Weitere Ausgestaltungen des erfindungsgemäßen Verfahrens ergeben sich analog zu den vorteilhaften Ausgestaltungen der erfindungsgemäßen Vorrichtung.

### Darstellung der Erfindung

Weitere Ziele, Vorteile, Merkmale und Anwendungsmöglichkeiten der vorliegenden Erfindung ergeben sich aus der nachfolgenden Beschreibung eines Ausführungsbeispieles anhand der Zeichnung. Dabei bilden alle beschriebenen und/oder bildlich dargestellten Merkmale für sich oder in beliebiger sinnvoller Kombination den Gegenstand der vorliegenden Erfindung, auch unabhängig von ihrer Zusammenfassung in den Ansprüchen oder deren Rückbeziehung.

Dabei zeigen:
- Figur 1: eine schematische Seitenansicht eines erfindungsgemäßen Weichseparators und
- Figur 2: eine schematische Schnittansicht entlang der Schnittlinie A-A gemäß Figur 1.

Gleiche oder gleichwirkende Bauteile werden in den nachfolgend dargestellten Figuren der Zeichnung anhand einer Ausführungsform mit Bezugszeichen versehen, um die Lesbarkeit zu verbessern.

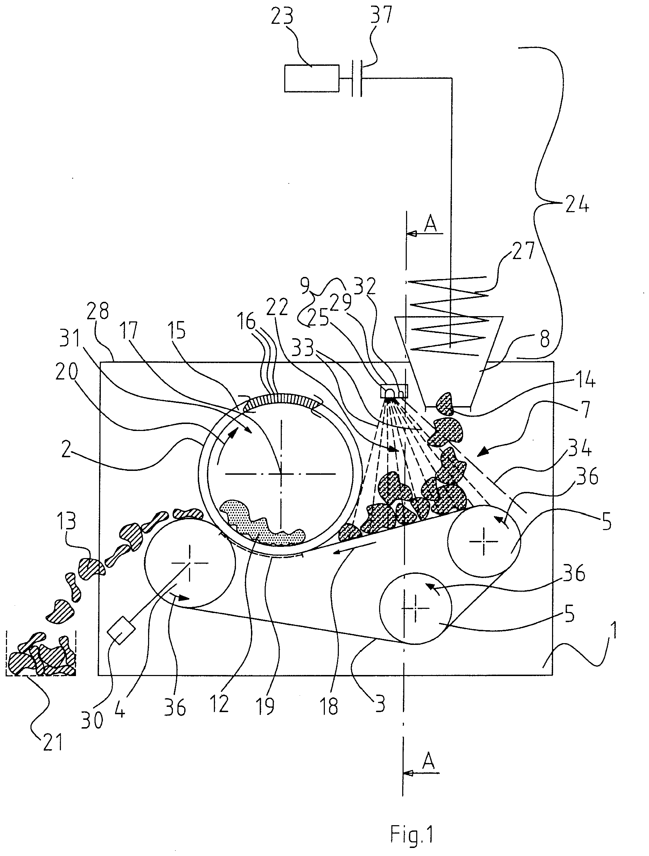

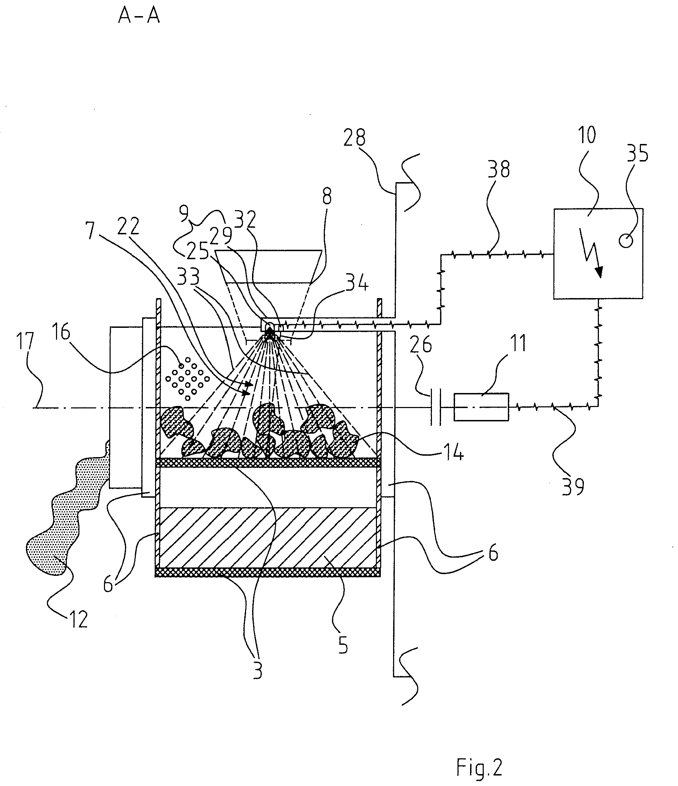

Fig. 1 und 2 zeigen die erfindungsgemäße Vorrichtung in Gestalt eines Weichseparators 1 zum Separieren eines Stoffgemenges 14 mit Stoffanteilen 12, 13 unterschiedlicher Konsistenz, beispielsweise Fleisch, das von Knochen, Knorpel oder Sehnen getrennt werden soll. Der Weichseparator weist eine rotationssymmetrische Lochtrommel 2 auf. Im vorliegenden Ausführungsbeispiel ist die Lochtrommel 2 zylindrisch ausgebildet und in ihrer Umfangswand 15 durch eine Vielzahl von darin vorgesehenen Öffnungen 16 perforiert. Die Lochtrommel 2 ist innerhalb einer Maschinenkarosserie 28 gehalten und darin drehbar um ihre Symmetrieachse 17 gelagert. Die Lochtrommel 2 ist mittels eines Antriebs 11 um die Symmetrieachse 17 betreibbar. Der Antrieb 11 ist mittels einer Koppeleinrichtung 26 mit der Lochtrommel 2 wirkverbunden.

Die Vorrichtung weist ferner ein endloses Quetschband 3 auf, das zumindest zum Teil aus einem elastischen Material besteht. Unter elastischem Material wird ein Material verstanden, das nachgiebiger ist als das Material der bspw. aus einem Stahl bestehenden Lochtrommel 2. Das elastische Material kann z.B. Kautschukgummi, Polyurethan oder ein künstlicher Gummi, also ein Synthesekautschuk wie bspw. EPDM sein. Alternativ kann auch ein festes, bspw. aus Stahl bestehendes Quetschband 3 mit einer hier nicht gezeigten elastischen Schicht aus einem der vorstehend beschriebenen, elastischen Materialien versehen sein. Das Quetschband 3 kann als Endlosband nahtlos hergestellt sein oder aber aus einem an seinen Enden zusammengefügten Bandabschnitt erzeugt werden.

Das Quetschband 3 ist über eine Rollenführung geführt, die vorliegend eine in bestimmten Ausführungsvarianten gekühlte Andrückwalze 4 sowie ein Rollenpaar 5 aufweist. Die Rollenführung ist derart ausgebildet, dass ein Teil des Quetschbandes 3 entlang eines Abschnittes der Umfangswand 15 der Lochtrommel 2 tangential geführt ist. Dieser Bereich wird im Weiteren als Verarbeitungszone bzw. als Überdeckung 19 bezeichnet. Das Quetschband 3 kann im Bereich der Überdeckung 19 an der Umfangswand 15 anliegend oder beabstandet dazu geführt sein. Jedenfalls wird das Quetschband 3 mittels der Andrückwalze 4 mit einem Druck bzw. einer elastischen Vorspannung derart beaufschlagt, dass es entweder dauerhaft unter Vorspannung an der Lochtrommel 2 unmittelbar anliegt oder erst beim Hindurchtreten eines Stoffgemenges 14 durch den Verarbeitungsbereich eine Vorspannung auf das Stoffgemenge und somit mittelbar auf die Lochtrommel 2 ausgeübt wird. Die Vorspannung gegen die Lochtrommel 2 kann beispielsweise mittels einer mit der Aufhängung der Andrückwalze 4 verbundenen Hydraulikeinheit 30 aufgebaut und eingestellt werden.

Die Rollen des Rollenpaares 5 und die Andrückwalze 4 sind zum Antreiben des Quetschbandes 3 mittels der Koppeleinrichtung 26, beispielsweise eines Kettentriebs, mit dem Antrieb 11 wirkverbunden und gleichzeitig mit der Lochtrommel 2 synchronisiert. Das Quetschband 3 ist unter Vorspannung auf die Rollenführung aufgezogen, so dass die mittels der Koppeleinrichtung 26 auf das Rollenpaar 5 und die Andrückwalze 4 übertragenen Antriebsbewegungen 36 im Wesentlichen schlupffrei auf das Quetschband 3 übertragen werden. Die Synchronisation der Lochtrommel 2 sowie des Quetschbandes 3 erfolgt in der Weise, dass der Bereich der Überdeckung 19 im Wesentlichen ohne eine Relativgeschwindigkeit zwischen Quetschband 3 und Lochtrommel 2 in ihrer Umfangsrichtung durchlaufen wird. Lochtrommel 2 und Quetschband 3 führen im Bereich der Überdeckung 19 eine gemeinsame Umfangsbewegung 20 um die Symmetrieachse 17 der Lochtrommel 2 aus.

Seitlich der Lochtrommel 2 sowie des Quetschbandes 3 sind Begrenzungen 6 vorgesehen, die das Quetschband 3 seitlich führen und die Verarbeitungszone, also den Bereich der Überdeckung 19 sowie eine der Verarbeitungszone vorgelagerte Einzugszone 7 seitlich begrenzen. Die Einzugszone 7 wird durch das tangential auf die Lochtrommel 2 in einer Einzugsrichtung 18 einlaufende Quetschband 3 sowie die seitlichen Begrenzungen 6 gebildet.

Über einen räumlich oberhalb der Einzugszone 7 angeordneten Einlauftrichter 8 wird das zu bearbeitende Stoffgemenge 14 der Einzugszone 7 zugeführt. Dem Einlauftrichter 8 ist eine Zuführungseinrichtung 24 vorgelagert. Die Zuführungseinrichtung 24 kann Teil des Weichseparators 1 sein. Bei Einsatz des Weichseparators 1 in einer Verarbeitungslinie ist die Zuführungseinrichtung 24 eine separate, dem Weichseparator 1 vorgelagerte Maschine, welche räumlich neben oder über dem Weichseparator 1 angeordnet ist und aus welcher das zuzuführende Stoffgemenge 14 in die Einzugszone 7 hinabfällt. Die Zuführungseinrichtung 24 kann dabei bspw. als Siloversorgung, Zuführband oder als manuelle Zuführung ausgebildet sein.

Die Zuführungseinrichtung 24 kann, wie vorliegend gezeigt, auch eine Fördereinrichtung 27 bspw. eine Förderschnecke aufweisen, mittels welcher Stoffgemenge 14 aus einem vorgelagerten Behältnis dem Einlauftrichter 8 und damit der Einzugszone 7 zugeführt wird. Die Zuführungseinrichtung 24 weist einen Antrieb 23 zum Betreiben der Fördereinrichtung 27 auf. Antrieb 23 und Fördereinrichung 27 sind mittels einer Koppeleinrichtung 37 miteinander wirkverbunden.

In einem Gehäuse 29 an der Maschinenkarosserie 28 ist ein Sensor 25 eines Erkennungssystems 9 angeordnet, welcher erfindungsgemäß den quantitativen Füllzustand bzw. das befüllte Volumen, den Füllstand oder den Füllgrad in der Einzugszone 7 detektiert.

Ein optionaler weiterer Sensor 32 des Erkennungssystems 9 kann der rein qualitativen Überwachung der Einzugszone 7 dahingehend dienen, ob Stoffgemenge 14 zugeführt wird. Der Sensor 32 kann beispielsweise ein Reflexions-Lichttaster sein, der die Präsenz von Objekten entlang seiner Sichtlinie 34 erkennen kann. Das Erkennungssystem 9 steht mit dessen Sensor 25 und dem ggf. zusätzlich vorhandenen Sensor 32 mittels einer Sensorleitung 38 in Kommunikationsverbindung mit einer Steuereinrichtung 10. Eine dauerhafte Präsenz von Objekten entlang der Sichtlinie 34 des Sensors 32 deutet auf eine Überfüllung der Einzugszone 7, also auf das Überschreiten eines Höchstfüllzustandes hin. Eine dauerhaft ausbleibende Präsenz von Objekten entlang der Sichtlinie 34 des Sensors 32 deutet auf das Leerlaufen der Einzugszone 7 und somit auf das Unterschreiten eines Mindestfüllzustandes hin.

Das Erkennungssystem 9 ermittelt mittels des Sensors 25 vorzugsweise kontinuierlich den Ist-Wert des Füllstandes des in der Einzugszone 7 befindlichen Stoffgemenges 14 und übermittelt einen entsprechenden Messwert oder einen aus dem Messwert abgeleiteten Füllzustandswert an die Steuereinrichtung 10. Beispielsweise erfolgt die Messung mittels einer Ultraschallmessung des Sensors 25 zur Bestimmung des kürzesten Abstandes zwischen dem Stoffgemenge 14 und dem Sensor 25 innerhalb seines Erkennungsbereichs 22.

Wie aus den Fig. 1 und 2 dargestellten Fächerlinien 33 hervorgeht, erstreckt sich der Erkennungsbereich 22 des Sensors 25 entlang der Länge der Fächerlinie 33 sowie etwa kegelförmig oder keulenförmig in Richtung des Quetschbandes 3, also in drei Richtungen im Raum. Insbesondere kann der Erkennungsbereich 22 des Sensors 25 innerhalb der Einzugszone auf einen Bereich des Quetschbandes 3 unmittelbar vor dem Beginn der Überdeckung 19 ausgerichtet werden, beispielsweise auf einen Bereich von etwa 0 bis 40 cm ausgehend vom Beginn der Überdeckung 19 und entgegen der Einzugsrichtung 18 gesehen.

Die Steuereinrichtung 10 kann mit einer speicherprogrammierbaren Steuerung verbunden oder durch diese gebildet sein. Die Steuereinrichtung 10 vergleicht den gemessenen Ist-Wert des Füllzustandes mit einem vorgegebenen Sollwert und regelt in Abhängigkeit des Füllzustandes und/oder in Abhängigkeit der Regeldifferenz zwischen dem Soll- und dem Ist-Wert die Geschwindigkeit des Antriebes 11, mit welchem sie über eine Steuerleitung 39 in Verbindung steht.

Bei der Erkennung einer Überschreitung eines Maximalwertes des Füllzustandes mittels des Sensors 25 und ggf. des Sensors 32, also bei drohender oder vorliegender Überfüllung, kann die Steuereinrichtung 10 ein Sondersignal ausgeben, mittels welchem der Antrieb 23 der Zuführungseinrichtung 24 oder die vorgelagerte Zuführung ausnahmsweise stillgesetzt werden kann, um eine Überfüllung zu vermeiden. Hierzu kann die Steuereinrichtung 10 zusätzlich über eine vorliegend nicht gezeigte Steuerleitung mit dem Antrieb 23 verbunden sein. Bei Unterschreitung eines Minimalwertes des Füllzustandes gemessen mittels des Sensors 25 und ggf. des Sensors 32, kann die Steuereinrichtung 10 den Antrieb 11 des Weichseparators 1 stillsetzen, um einen Trockenlauf von Lochtrommel 2 und Quetschband 3 zu vermeiden.

Das mit dem Weichseparator 1 durchgeführte Verarbeitungsverfahren sieht vor, ein Stoffgemenge 14 mit Stoffanteilen 12, 13 unterschiedlicher Konsistenz derart zu verarbeiten, dass die Stoffanteile 12 mit einer ersten Konsistenz von den Stoffanteilen 13 mit einer zweiten Konsistenz abgetrennt werden. Beispielsweise kann Restfleisch von Knochen, Knorpel oder Sehnen abgetrennt werden.

Die Konsistenz des Stoffgemenges 14 kann die Festigkeit von zu trennendem Gewebe, dessen Härte, Fließfähigkeit oder dergleichen betreffen. Beispielsweise ist bei einem Entsehnungsprozess die Festigkeit von im Fleisch enthaltenen Sehnen höher als die Festigkeit des die Sehnen umgebenden Fleisches. Bei der Herstellung von Separatorenfleisch aus Geflügelkarkassen oder bei der Herstellung von Fischfarce durch Abtrennung von Haut- und Grätenanteilen kann beispielsweise von einer unterschiedlichen Härte oder Weichheit der einzelnen Stoffanteile 12, 13 gesprochen werden. Bei der Erzeugung von Obstsäften oder Obstmusen lässt sich die Konsistenz der einzelnen Stoffanteile 12, 13 durch unterschiedliche Fließfähigkeiten der Fruchtanteile beschreiben.

Das Stoffgemenge 14 mit den beiden Stoffanteilen 12, 13 unterschiedlicher Konsistenz wird in den Fig. 1 und 2 in der Weise gekennzeichnet, dass der erste Stoffanteil 12 mit der ersten Konsistenz durch eine punktförmige Schraffur und der zweite Stoffanteil 13 mit der zweiten Konsistenz durch eine schräge Linienschraffur dargestellt ist.

Wie in den Fig. 1 und 2 zu erkennen ist, weist das zunächst in dem Einlauftrichter 8 bereitgehaltene Stoffgemenge 14 sowohl die Stoffanteile 12 der ersten Konsistenz als auch Stoffanteile 13 der zweiten Konsistenz auf. Aus dem Einlauftrichter 8 fällt das Stoffgemenge 14 in die Einzugszone 7 und dort auf das Quetschband 3.

Das Stoffgemenge 14 häuft sich in der Einzugszone 7 an und wird durch die an der Lochtrommel 2 und dem Quetschband 3 auftretende Einzugsbewegung 18 in den Bereich der Überdeckung 19, d.h. in die Verarbeitungszone, eingezogen, wo das Quetschband 3 einen Anpressdruck auf das Stoffgemenge 14 in Richtung der Umfangswand 15 der Lochtrommel 2 ausübt.

Unter dem Einfluss der Presskraft trennen sich die Stoffanteile 12 des Stoffgemenges 14 von den Stoffanteilen 13 und treten durch umfangsseitige Öffnungen 16 der Lochtrommel 2 in deren Innenraum 31 ein. Die Stoffanteile 13 der zweiten Konsistenz verbleiben dagegen zwischen der Umfangswandung 15 und dem Quetschband 3, wobei diese Anteile zumindest teilweise in die elastischen Bereiche des Quetschbandes 3 einsinken und so vor einer übermäßigen Kraftbeaufschlagung durch die Presskraft verschont werden. Dies dient vor allem dazu, eine Freisetzung unerwünschter Stoffe aus diesen Stoffanteilen 13 zu vermeiden und deren Übertritt in die Stoffanteile 12 im Innenraum 31 der Lochtrommel 2 zu unterbinden. Beispielsweise kann es bei der Bearbeitung von Hühnerkarkassen wichtig sein, die zwischen dem Quetschband 3 und der Lochtrommel 2 befindlichen Hühnerknochen nicht zu stark zu zerkleinern, so dass der in den Innenraum 31 der Lochtrommel 2 übertretende Fleischanteil nur begrenzt Calcium aus den zerkleinerten Hühnerknochen aufnehmen kann.

Nach dem Durchlaufen der Verarbeitungszone werden die nicht separierten Stoffanteile 13 des Stoffgemenges 14 in einer Abführeinrichtung 21 aufgefangen. Die Abführeinrichtung 21 kann auch ein regelmäßig zu wechselnder Behälter sein.

Zu Beginn des Verfahrens wird die Lochtrommel 2 zusammen mit dem Quetschband 3 mit einer vorgegebenen Startgeschwindigkeit gefahren, bei welcher das in der Einzugszone 7 vorliegende Stoffgemenge 14 eingezogen und verarbeitet wird. Die Startgeschwindigkeit kann eine mit einem Eingabemittel 35 verstellbare Mindestgeschwindigkeit sein, die für einen zuverlässigen Einzug des Stoffgemenges 14 aus der Einzugszone 7 in die Verarbeitungszone, also die Überdeckung 19, erforderlich ist. Die Einstellung einer Mindestgeschwindigkeit sorgt zudem auch dafür, dass bei Aussetzen der Zuführung des Stoffgemenges 14 die Einzugszone 7 entleert wird, bevor die Lochtrommel 2 und das Quetschband 3 zum Schutz vor Trockenlauf selbsttätig angehalten werden.

Der räumlich oberhalb der Einzugszone 7 angeordnete Sensor 25 des Erkennungssystems 9 bestimmt den Füllzustand der Einzugszone 7. Sobald der Füllzustand ansteigt oder abnimmt, wird die Verarbeitungsgeschwindigkeit der Lochtrommel 2 und des Quetschbandes 3 erhöht oder erniedrigt, so dass ein gleichbleibender Füllzustand in der Einzugszone 7 angestrebt wird. Hierdurch erfolgt eine selbsttätige Anpassung der Verarbeitungsgeschwindigkeit an die in der Einzugszone 7 befindliche Menge des Stoffgemenges 14. Das Anstreben eines vorgegebenen Füllstandes kann beispielsweise dafür sorgen, dass das in die Verarbeitungszone einzuziehende Stoffgemenge 14 zuverlässig eingezogen werden kann, wenn stets ausreichend darüber liegendes Material mit dessen Gewichtskraft auf dem Quetschband 3 aufliegt. Unterschiedliche Füllhöhen bzw. Füllstände können beispielsweise für unterschiedliche Arten des Stoffgemenges 14 vorgegeben werden.

Bei Anstreben eines vorgegebenen Füllzustandes dient die Einzugszone 7 automatisch auch als Materialpuffer, der Unterbrechungen in der Zufuhr von Stoffgemenge 14 in die Einzugszone 7 zeitweise ausgleichen und eine Stillsetzung des Antriebs 11 vermeiden kann.

Der der Geschwindigkeitsanpassung zugrunde liegende Algorithmus in der Steuerungseinrichtung 10 kann bspw. darauf basieren, dass jedem Füllzustandswert ein bestimmter Geschwindigkeitswert fest zugeordnet wird. Dies ist auch mit sehr einfachen Steuereinrichtungen realisierbar. Die zugeordneten Werte können sogar in der Vorrichtung gegebene Nichtlinearitäten, beispielsweise eine unregelmäßige geometrische Form der Einzugszone 7, ausgleichen, um zu einem zufriedenstellenden Regelungsergebnis zu kommen.

Alternativ kann die Steuereinrichtung 10 auch so ausgebildet sein, dass eine stetige Reglung mit kontinuierlicher Ermittlung einer Regeldifferenz aus dem gemessenen Ist-Wert des Füllzustandes und dem vorgegebenen Soll-Wert erfolgt und die Geschwindigkeit des Antriebs stets zum Anstreben des vorgegebenen Füllstandes nachgeregelt wird. Dies kann einerseits dazu dienen, schnell auf sich stark ändernde Füllzustände reagieren zu können oder aber die Antriebsregelung so träge auszulegen, dass verschleißintensive Beschleunigungs- oder Abbremsvorgänge vermieden werden. Auch bei einer stetigen Regelung der Geschwindigkeit von Lochtrommel 2 und Quetschband 3 in Abhängigkeit des Füllzustandes kann eine Mindestgeschwindigkeit vorgesehen sein, mit der die Lochtrommel 2 und das Quetschband 3 wenigstens betrieben werden, um vor dem Abschalten zum Trockenlaufschutz die Einzugszone 7 zuverlässig zu entleeren.

Die stetige Regelung kann beispielsweise als einfacher Proportionalregler aber auch als Regler mit zusätzlichem integrierendem Regelglied und/oder differenzierendem Regelglied, also als so genannter PID-Regler ausgebildet sein.

Das Erkennungssystem 9 kann als Ultraschallmessung ausgeführt sein, die den höchsten Punkt des in der Einzugszone 7 angehäuften Stoffgemenges 14 ermittelt. Alternativ kann jedoch auch ein optischer Sensor, beispielsweise ein Lasersensor oder eine Kamera verwendet werden, die auf die Einzugszone 7 ausgerichtet sind bzw. ist und auf Grund der Erkennung einzelner Untereinheiten des Stoffgemenges auf den tatsächlichen Füllzustand schließen können. Denkbar ist auch eine Vermessung durch Radar.

Der Sensor 25 kann auch so ausgebildet sein, dass er eine zwei- oder dreidimensionale Bildgebung der Einzugszone 7 ermöglicht, aus der dann eine Berechnung des in der Einzugszone 7 enthaltenen Volumens an Stoffgemenge berechnet wird.

Somit kann das System immer in der am niedrigsten möglichen Geschwindigkeit betrieben werden, so dass der Verschleiß des Quetschbandes 3 sowie weiterer Teile minimiert wird. Ebenfalls sinkt die Energieaufnahme des Systems bei gleichbleibender Verarbeitungsausbeute.

### Bezugszeichenliste

- 1: Weichseparator
- 2: Lochtrommel
- 3: Quetschband
- 4: Andrückwalze
- 5: Rollenpaar
- 6: seitliche Begrenzung
- 7: Einzugszone
- 8: Einlauftrichter
- 9: Erkennungssystem
- 10: Steuereinrichtung
- 11: Antrieb
- 12: Stoffanteil mit erster Konsistenz
- 13: Stoffanteil mit zweiter Konsistenz
- 14: Stoffgemenge
- 15: Umfangswand
- 16: Öffnungen
- 17: Symmetrieachse
- 18: Einzugsrichtung
- 19: Überdeckung
- 20: Umfangsbewegung
- 21: Abführeinrichtung
- 22: Erkennungsbereich
- 23: Antrieb
- 24: Zuführungseinrichtung
- 25: Sensor
- 26: Koppeleinrichtung
- 27: Fördereinrichtung
- 28: Maschinenkarosserie
- 29: Gehäuse
- 30: Hydraulikeinheit
- 31: Innenraum
- 32: Sensor
- 33: Fächerlinie
- 34: Sichtlinie
- 35: Eingabemittel
- 36: Antriebsbewegung
- 37: Koppeleinrichtung
- 38: Sensorleitung
- 39: Steuerleitung

## Patentansprüche

1. Weichseparator (1) mit einer umfangsseitig perforierten Lochtrommel (2) sowie mit einem entlang eines Umfangsabschnittes (19) der Lochtrommel (2) geführten Quetschband (3), das zusammen mit der Lochtrommel (2) betreibbar ist, und mit einer Einzugszone (7), aus der ein aus Stoffanteilen (12, 13) unterschiedlicher Konsistenz bestehendes Stoffgemenge (14) zum Trennen und Separieren der Stoffanteile (12, 13) zwischen die Lochtrommel (2) und das Quetschband (3) eingezogen wird, **gekennzeichnet durch** ein Erkennungssystem (9) zur quantitativen Bestimmung des Füllzustandes der Einzugszone (7) und eine mit dem Erkennungssystem (9) verbundene Steuereinrichtung (10) zur füllzustandsabhängigen Anpassung der Geschwindigkeit von Lochtrommel (2) und Quetschband (3).

2. Weichseparator (1) nach Anspruch 1, **dadurch gekennzeichnet, dass** der Füllzustand berührungslos, vorzugsweise optisch oder akustisch, insbesondere optisch mittels Laserabtastung oder Kameraerfassung oder akustisch mittels Ultraschallmessung bestimmt wird.

3. Weichseparator (1) nach Anspruch 2, **dadurch gekennzeichnet, dass** das Erkennungssystem (9) wenigstens einen Sensor (25), vorzugsweise einen optischen, akustischen und/oder bildgebenden Sensor aufweist, dessen Erkennungsbereich (22) sich in wenigstens zwei, vorzugsweise in drei Richtungen im Raum erstreckt und wenigstens bereichsweise auf die Einzugszone (7) ausgerichtet ist.

4. Weichseparator (1) nach einem der vorhergehenden Ansprüche,
**dadurch gekennzeichnet, dass** das Erkennungssystem (9) den Füllzustand mittels wenigstens einer Abstandsmessung ermittelt, die den Abstand zwischen wenigstens einem Sensor (25) des Erkennungssystems (9) und dem in einem Erkennungsbereich (22) des Erkennungssystems (9) befindlichen Stoffgemenges (14) bestimmt.

5. Weichseparator (1) nach einem der vorhergehenden Ansprüche,
**dadurch gekennzeichnet, dass** das Erkennungssystem (9) zur Erzeugung eines vom Füllzustand abhängigen Messsignals und zur Berechnung eines von dem Messsignal abgeleiteten Füllzustandssignals ausgebildet ist, wobei das Füllzustandssignal im Wesentlichen einem Füllstand, Füllgrad oder einer Füllmenge entspricht und die Steuereinrichtung (10) zur füllzustandsabhängigen Anpassung der Geschwindigkeit von Lochtrommel (2) und Quetschband (3) anhand des Füllzustandssignals ausgebildet ist.

6. Weichseparator (1) nach einem der vorhergehenden Ansprüche,
**dadurch gekennzeichnet, dass** in der Steuereinrichtung (10) feste, bestimmten Füllzuständen zugeordnete Geschwindigkeitswerte hinterlegt sind.

7. Weichseparator (1) nach einem der vorhergehenden Ansprüche,
**dadurch gekennzeichnet, dass** die Steuereinrichtung (10) ein stetiges Regelglied aufweist, welches die Geschwindigkeit in Abhängigkeit des Füllzustandes der Einzugszone (7), vorzugsweise proportional oder integral zum Füllzustand der Einzugszone (7) regelt.

8. Weichseparator (1) nach Anspruch 7, **dadurch gekennzeichnet, dass** die Steuereinrichtung (10) zusätzlich mit wenigstens einem integrierenden und/oder differenzierenden Regelglied ausgebildet ist.

9. Weichseparator (1) nach einem der vorhergehenden Ansprüche, **dadurch gekennzeichnet, dass** die Lochtrommel (2) und das Quetschband (3) mittels eines Antriebes (11) betreibbar sind und die Steuereinrichtung (10) in den Antrieb (11) integriert ist.

10. Weichseparator (1) nach einem der vorhergehenden Ansprüche, **dadurch gekennzeichnet, dass** die Steuereinrichtung (10) zur Anpassung der Geschwindigkeit von Lochtrommel (2) und Quetschband (3) unterhalb eines Maximal- und/oder oberhalb eines Minimalwertes ausgebildet ist.

11. Weichseparator (1) nach Anspruch 10, **gekennzeichnet durch** Eingabemittel zur Verstellung des Maximal- und/oder Minimalwertes der Geschwindigkeit von Lochtrommel (2) und Quetschband (3).

12. Weichseparator (1) nach einem der vorhergehenden Ansprüche, **dadurch gekennzeichnet, dass** die Steuereinrichtung (10) zum Stillsetzen von Lochtrommel (2) und Quetschband (3) bei Unterschreitung eines vorgegebenen Mindestfüllzustandes ausgebildet ist.

13. Weichseparator (1) nach Anspruch 12, **dadurch gekennzeichnet, dass** das Erkennungssystem (9) wenigstens einen Sensor (25) zur quantitativen Bestimmung des Füllzustandes der Einzugszone (7) und wenigstens einen Sensor (32) zur Erkennung der Unterschreitung des Mindestfüllzustandes und/oder Überschreiten eines Höchstfüllzustandes aufweist.

14. Weichseparator (1) nach einem der vorhergehenden Ansprüche,
**dadurch gekennzeichnet, dass** die Steuereinrichtung (10) zum Ausgeben eines Steuersignals bei Erkennung einer Überfüllung der Einzugszone (7) ausgebildet ist, um eine dem Weichseparator (1) vorgelagerte Zuführungseinrichtung zu verlangsamen oder stillzusetzen.

15. Verfahren zum Betreiben eines Weichseparators (1) nach einem der vorhergehenden Ansprüche, **dadurch gekennzeichnet, dass** die Geschwindigkeit von Lochtrommel (2) und Quetschband (3) an den Füllzustand der Einzugszone (7) angepasst, insbesondere in Abhängigkeit von dem Füllzustand der Einzugszone (7) geregelt wird.

## Claims

1. Soft material separator (1) having a perforated drum (2), which is perforated on the circumference, and having a squeezing band (3), which is guided along a circumferential section (19) of the perforated drum (2) and can be operated together with the perforated drum (2), and having a feed zone (7), from which a substance mixture (14) consisting of substance components (12, 13) of different consistencies is drawn in between the perforated drum (2) and the squeezing band (3) for isolating and separating the substance components (12, 13), **characterized by** a detection system (9) for quantitatively determining the filling state of the feed zone (7) and a control device (10), which is connected to the detection system (9) and is intended for adapting the speed of the perforated drum (2) and the squeezing band (3) depending on the filling state.

2. Soft material separator (1) according to Claim 1, **characterized in that** the filling state is determined contactlessly, preferably optically or acoustically, in particular optically by means of laser scanning or camera recording or acoustically by means of ultrasonic measurement.

3. Soft material separator (1) according to Claim 2, **characterized in that** the detection system (9) has at least one sensor (25), preferably an optical, acoustic and/or imaging sensor, the detection area (22) of which extends in at least two spatial directions, preferably in three spatial directions, and is directed at the feed zone (7), at least in certain regions.

4. Soft material separator (1) according to one of the preceding claims, **characterized in that** the detection system (9) ascertains the filling state by means of at least one distance measurement, which determines the distance between at least one sensor (25) of the detection system (9) and the substance mixture (14) located in a detection area (22) of the detection system (9).

5. Soft material separator (1) according to one of the preceding claims, **characterized in that** the detection system (9) is designed for generating a measurement signal dependent on the filling state and for calculating a filling-state signal derived from the measurement signal, wherein the filling-state signal substantially corresponds to a filling state, a degree of filling or a filling quantity and the device (10) is designed for adapting the speed of the perforated drum (2) and the squeezing band (3) depending on the filling state on the basis of the filling-state signal.

6. Soft material separator (1) according to one of the preceding claims, **characterized in that** fixed speed values assigned to specific filling states are stored in the control device (10).

7. Soft material separator (1) according to one of the preceding claims, **characterized in that** the control device (10) has a continuous-action controlling element, which controls the speed in dependence on the filling state of the feed zone (7), preferably proportionally or integrally in relation to the filling state of the feed zone (7).

8. Soft material separator (1) according to Claim 7, **characterized in that** the control device (10) is additionally formed with at least one integrating and/or differentiating controlling element.

9. Soft material separator (1) according to one of the preceding claims, **characterized in that** the perforated drum (2) and the squeezing band (3) can be operated by means of a drive (11) and the control device (10) is integrated in the drive (11).

10. Soft material separator (1) according to one of the preceding claims, **characterized in that** the control device (10) is designed for adapting the speed of the perforated drum (2) and the squeezing band (3) below a maximum value and/or above a maximum value.

11. Soft material separator (1) according to Claim 10, **characterized by** input means for adjusting the maximum and/or minimum value of the speed of the perforated drum (2) and the squeezing band (3).

12. Soft material separator (1) according to one of the preceding claims, **characterized in that** the control device (10) is designed for stopping the perforated drum (2) and the squeezing band (3) when the filling state is below a prescribed minimum value.

13. Soft material separator (1) according to Claim 12, **characterized in that** the detection system (9) has at least one sensor (25) for quantitatively determining the filling state of the feed zone (7) and at least one sensor (32) for detecting when the filling state is below a minimum value and/or when the filling state is above a maximum value.

14. Soft material separator (1) according to one of the preceding claims, **characterized in that** the control device (10) is designed for outputting a control signal when overfilling of the feed zone (7) is detected, in order to slow down or stop a feeding device arranged upstream of the soft material separator (1).

15. Method for operating a soft material separator (1) according to one of the preceding claims, **characterized in that** the speed of the perforated drum (2) and the squeezing band (3) is adapted to the filling state of the feed zone (7), in particular is controlled in dependence on the filling state of the feed zone (7).

## Revendications

1. Séparateur souple (1) comprenant un tambour perforé (2) qui a été perforé sur la périphérie et une bande de pressage (3) qui est guidée le long d'une portion de périphérie (19) du tambour perforé (2) et qui peut fonctionner conjointement avec le tambour perforé (2), et une zone d'introduction (7) à partir de laquelle un mélange de substances (14) comprenant des fractions de substance (12, 13) de différentes consistances est introduit entre le tambour perforé (2) et la bande de pressage (3) afin de séparer et cribler les fractions de substance (12, 13), **caractérisé par** un système de détection (9) destiné à déterminer de manière quantitative le niveau de remplissage de la zone d'introduction (7) et un dispositif de commande (10) relié au système de détection (9) et destiné à adapter la vitesse du tambour perforé (2) et de la bande de pressage (3) en fonction du niveau de remplissage.

2. Séparateur souple (1) selon la revendication 1, **caractérisé en ce que** le niveau de remplissage est déterminé sans contact, de préférence optiquement ou acoustiquement, notamment optiquement par balayage laser ou détection par caméra ou acoustiquement par mesure à ultrasons.

3. Séparateur souple (1) selon la revendication 2, **caractérisé en ce que** le système de détection (9) comporte au moins un capteur (25), de préférence un capteur optique, acoustique et/ou d'imagerie, dont la zone de détection (22) s'étend dans au moins deux, de préférence trois, directions de l'espace et qui est aligné au moins par endroits sur la zone d'introduction (7).

4. Séparateur souple (1) selon l'une des revendications précédentes, **caractérisé en ce que** le système de détection (9) détermine le niveau de remplissage au moyen d'au moins une mesure de distance qui mesure la distance entre au moins un capteur (25) du système de détection (9) et le mélange de substances (14) situé dans une zone de détection (22) du système de détection (9).

5. Séparateur souple (1) selon l'une des revendications précédentes, **caractérisé en ce que** le système de détection (9) est conçu pour générer un signal de mesure dépendant du niveau de remplissage et pour calculer un signal de niveau de remplissage dérivé du signal de mesure, le signal de niveau de remplissage correspondant sensiblement à un niveau de remplissage, un degré de remplissage ou une quantité de remplissage et le dispositif de commande (10) est conçu pour adapter la vitesse du tambour perforé (2) et de la bande de pressage (3) en fonction du niveau de remplissage à l'aide du signal de niveau de remplissage.

6. Séparateur souple (1) selon l'une des revendications précédentes, **caractérisé en ce que** des valeurs de vitesse fixes, associées à des états de remplissage déterminés, sont mémorisées dans le dispositif de commande (10).

7. Séparateur souple (1) selon l'une des revendications précédentes, **caractérisé en ce que** le dispositif de commande (10) comporte un organe de régulation continue qui régule la vitesse en fonction du niveau de remplissage de la zone d'introduction (7), de préférence de manière proportionnelle ou intégrale au niveau de remplissage de la zone d'introduction (7).

8. Séparateur souple (1) selon la revendication 7, **caractérisé en ce que** le dispositif de commande (10) est en outre conçu avec au moins un organe de régulation intégrateur et/ou différenciateur.

9. Séparateur souple (1) selon l'une des revendications précédentes, **caractérisé en ce que** le tambour perforé (2) et la bande de pressage (3) peuvent fonctionner au moyen d'un entraînement (11) et le dispositif de commande (10) est intégré à l'entraînement (11).

10. Séparateur souple (1) selon l'une des revendications précédentes, **caractérisé en ce que** le dispositif de commande (10) est conçu pour adapter la vitesse du tambour perforé (2) et de la bande de pressage (3) au-dessous d'une valeur maximale et/ou au-dessus d'une valeur minimale.

11. Séparateur souple (1) selon la revendication 10, **caractérisé par** des moyens d'entrée destinés à régler la valeur maximale et/ou minimale de la vitesse du tambour perforé (2) et de la bande de pressage (3).

12. Séparateur souple (1) selon l'une des revendications précédentes, **caractérisé en ce que** le dispositif de commande (10) est conçu pour arrêter le tambour perforé (2) et la bande de pressage (3) lorsque le niveau de remplissage devient inférieur à un minimum prédéterminé.

13. Séparateur souple (1) selon la revendication 12, **caractérisé en ce que** le système de détection (9) comporte au moins un capteur (25) destiné à déterminer de manière quantitative le niveau de remplissage de la zone d'introduction (7) et au moins un capteur (32) destiné à détecter le moment où le niveau de remplissage devient inférieur à un minimum et/ou supérieur à un maximum.

14. Séparateur souple (1) selon l'une des revendications précédentes, **caractérisé en ce que** le dispositif de commande (10) est conçu pour délivrer un signal de commande lors de la détection d'un remplissage en excès de la zone d'introduction (7) afin de ralentir ou d'arrêter un dispositif d'acheminement monté en amont du séparateur souple (1).

15. Procédé de fonctionnement d'un séparateur souple
(1) selon l'une des revendications précédentes, **caractérisé en ce que** la vitesse du tambour perforé
(2) et de la bande de pressage (3) est adaptée au niveau de remplissage de la zone d'introduction (7), notamment régulée en fonction du niveau de remplissage de la zone d'introduction (7).
